# EUROPÄISCHE PATENTSCHRIFT

(11) **EP 3 657 059 B1**
(45) Veröffentlichungstag und Bekanntmachung des Hinweises auf die Patenterteilung: **23.11.2022**
(21) Anmeldenummer: 19217842.4
(22) Anmeldetag: 08.08.2017
(51) Int. Cl.: F16L 11/112, F16L 11/24

(54) **FLEXIBLE SCHLAUCHLEITUNG MIT INTEGRIERTEM SENSORMATERIAL**
FLEXIBLE HOSE WITH INTEGRATED SENSOR MATERIAL
CONDUITE FLEXIBLE POURVUE DE MATÉRIAU DÉTECTEUR INTÉGRÉ

(30) Priorität: 16.08.2016 EP 16184348
(43) Veröffentlichungstag der Anmeldung: 27.05.2020
(62) Teilanmeldung aus: 17749476.2
(73) Patentinhaber: Masterflex SE, 45891 Gelsenkirchen (DE)
(72) Erfinder: Nüssen, Stefan, 45879 Gelsenkirchen (DE); Seoane, Enrique, 38114 Braunschweig (DE); Jacobi, Joachim, 44803 Bochum (DE); Kapteina, Tanja, 45968 Gladbeck (DE); Krossa, Rita, 45891 Gelsenkirchen (DE)
(74) Vertreter: Uexküll & Stolberg

(56) Entgegenhaltungen:
- CN-U- 203 404 510
- DE-U1-202008 015 718
- JP-A- 2006 300 225
- JP-U- H02 105 683
- US-A1- 2008 032 119
- US-A1- 2013 273 799

## Beschreibung

Die vorliegende Erfindung betrifft eine flexible Schlauchleitung mit integriertem Sensormaterial.

Eine solche Schlauchleitung ist aus JPH02105683U bekannt.

Schlauchleitungen kommen insbesondere dann zur Anwendung, wenn flexible Verbindungen zur Übertragung von Feststoffen oder von flüssigen oder gasförmigen Medien benötigt werden. Die Auswahl einer Schlauchleitung richtet sich in der Regel nach den spezifischen Anforderungen der vorgesehenen Anwendung, so dass eine Vielzahl von Eigenschaften der Schlauchleitung wie z.B. Durchmesser, Mindestbiegeradius, Druckbelastung und Temperaturbeständigkeit zu berücksichtigen ist.

In vielen Fällen werden Schlauchleitungen in Betriebsanlagen eingesetzt und die Betreiber von solchen Anlagen müssen zur Überwachung von sicherheitsrelevanten Betriebsparametern Messsonden durch aufwendige Maßnahmen so positionieren, dass sie z.B. den Volumenstrom eines Mediums analysieren bzw. überwachen können. Hierzu müssen Teile der Anlagenperipherie oftmals aufwendig umkonstruiert werden, um die Sonde in die erforderliche Position zu bringen. Aussagen zu dem Zustand der Schlauchleitung selbst sind auf diese Art und Weise jedoch nicht oder nur begrenzt möglich.

Grundsätzlich wäre es wünschenswert, Betriebs- und Funktionalitätsparameter einer gesamten Betriebsanlage, d.h. nicht nur an ausgewählten Punkten in der Anlagenperipherie, sondern auch die Betriebsparameter der darin enthaltenen Schlauchleitungen, vorzugsweise in Echtzeit zu überwachen. So können beispielsweise eine gleichbleibende Produktqualität gewährleistet werden und Störungen des Betriebsablaufs verhindert werden, da mögliche Störungsursachen wie z.B. eine Überbeanspruchung des Schlauchmaterials schnell erkannt und dann behoben werden können. Auf diese Weise können die Lebensdauer und Zuverlässigkeit von Schlauchleitungen erhöht werden, Schlauchleitungsausfälle minimiert werden, Arbeitskräfte geschützt werden und eine hohe Qualität, Produktionssicherheit und Kosteneffizienz garantiert werden.

Der vorliegenden Erfindung liegt somit die Aufgabe zugrunde, eine flexible Schlauchleitung bereitzustellen, die auf einfache Art und Weise eine Überwachung von Betriebs- und Funktionalitätsparametern der Schlauchleitung ermöglicht. Zu den zu überwachenden Parametern sollen beispielsweise, aber nicht ausschließlich, die Temperatur der Schlauchwandung und/oder des Mediums in der Kontaktzone, der auf die Schlauchwandung einwirkende Über- oder Unterdruck, der Biegeradius der Schlauchleitung, das Vorhandensein von Verengungen des Innendurchmessers der Schlauchleitung, die Vibration der Schlauchleitung, die Dehnung oder Kompression der Schlauchleitung, die Integrität der Schlauchwandung und der Alterungsgrad des Materials der Schlauchwandung zählen.

Diese Aufgabe wird durch die flexible Schlauchleitung gemäß Anspruch 1 gelöst. Vorteilhafte Ausführungsformen der erfindungsgemäßen Schlauchleitung werden in den Unteransprüchen offenbart.

Die Erfindung betrifft somit eine flexible Schlauchleitung mit einer Wandung, wobei die Wandung integriertes Sensormaterial aufweist, das eine sich mit einem zu ermittelnden Betriebsparameter der Schlauchleitung veränderliche Materialeigenschaft hat.

Unter dem Begriff "flexible Schlauchleitung" im Sinne dieser Anmeldung werden biegsame Schlauchleitungen an sich sowie Schlauchkupplungen und deren Teile verstanden. Die Schlauchleitung nimmt üblicherweise die Gestalt eines langgestreckten, zylinderförmigen Hohlkörpers an. Ggf. weist die Schlauchleitung an einem oder an beiden ihrer Enden eine Schlauchkupplung oder ein Teil einer Schlauchkupplung, ein sog. Anschlussstück, auf, mit Hilfe derer die Schlauchleitung mit z.B. einer anderen Schlauchleitung oder anderen Einheiten, wie einer festen Rohrleitung oder anderen Teilen einer Anlageneinheit, verbunden werden kann.

In einer bevorzugten Ausführungsform der vorliegenden Erfindung umfasst die Wandung der Schlauchleitung thermoplastischen Kunststoff. Lediglich beispielshaft und nicht einschränkend seien hierzu Silikone oder thermoplastische Elastomere auf Urethanbasis (TPU), d.h. Polyurethan (PU), wie z.B. Polyether-Polyurethan und Polyester-Polyurethan, Polyvinylchlorid (PVC) oder Polyethylen (PE) genannt, aber auch thermoplastische Vulkanisate (TPV), wie Santropene. Weitere geeignete Materialien stellen insbesondere thermoplastische Elastomere dar, wie:
- TPA (Thermoplastische Copolyamide)
- TPC (Thermoplastische Polyesterelastomere / Thermoplastische Copolyester)
- TPO (Thermoplastische Elastomere auf Olefinbasis), z.B. PP/EPDM
- TPS (Styrol-Blockcopolymere, z.B. SBS, SEBS, SEPS, SEEPS und MBS).

Derartige thermoplastische Schlauchleitungen können beispielsweise in der Weise hergestellt werden, dass der thermoplastische Kunststoff direkt in die Form der gewünschten Schlauchleitung extrudiert wird. Alternativ kann der thermoplastische Kunststoff z.B. mittels Extrusion in die Form einer Werkstoffbahn, wie z.B. einer extrudierten Profilfahne oder einer Folienbahn, überführt werden, die anschließend helixförmig aufgewickelt wird und bei der Längskantenabschnitte benachbarter Wendelwicklungen bzw. die gegenüberliegenden Randbereiche der Werkstoffbahn überlappend miteinander verbunden werden. Ferner ist auch möglich, dass die Schlauchwandung mehrere Lagen oder Schichten des thermoplastischen Kunststoffes umfasst, die z.B. in Form von mehreren Folienlagen übereinander angeordnet sind ("Sandwich-Bauweise").

In einer weiteren bevorzugten Ausführungsform der vorliegenden Erfindung umfasst die Wandung der Schlauchleitung ein Gewebe. Das Material des Gewebes ist vorzugsweise ausgewählt aus der Gruppe bestehend aus Glasfasern, Textilfasern, mineralischen Fasern, Aramidfasern, metallischem Gewebe, wie z.B. Edelstahl, wie Edelstahl 1.4301, Kunststoffasern, wie z.B. Polyamid- und/oder Polyesterfasern, und Kombinationen davon. Das Gewebe kann unbeschichtet sein oder mit Kunststoffen und insbesondere den oben genannten thermoplastischen Kunststoffen oder Elastomeren, wie z.B. Neopren, Hypalon und Viton, beschichtet sein. Alternativ können auch Kaschierungen von Geweben mit entsprechenden Folien eingesetzt werden. Derartige Gewebeschlauchleitungen können beispielsweise in der Weise hergestellt werden, dass ein oder mehrere beschichtete oder unbeschichtete Gewebebänder mittels eines Klemm-, Näh-, Schweiß- oder Vulkanisierungsverfahrens zu der gewünschten Schlauchleitung verbunden werden.

Die Wandung der erfindungsgemäßen Schlauchleitung, wie z.B. einer thermoplastischen Schlauchleitung oder einer Gewebeschlauchleitung, weist ein helixförmig verlaufendes Verstärkungselement, wie z.B. eine helixförmig verlaufende Verstärkungswendel, auf. Die erfindungsgemäße Schlauchleitung stellt somit einen sog. Spiralschlauch dar. Bei derartigen Schlauchleitungen kann das Verstärkungselement vollständig in die Schlauchwandung eingebettet sein, so dass es durch die Schlauchwandung von dem Schlauchinneren und dem Schlauchäußeren getrennt ist. Es ist auch möglich, dass das Verstärkungselement nur teilweise in die Schlauchwandung eingebettet ist und ein Abschnitt des Verstärkungselements zum Schlauchinneren oder Schlauchäußeren hin freiliegt. So ist es beispielsweise möglich, dass das Verstärkungselement auf der äußeren Oberfläche der Schlauchwandung angeordnet ist.

Derartige Schlauchleitungen mit helixförmig verlaufender Verstärkungswendel können z.B. in der Weise hergestellt werden, dass eine Werkstoffbahn, an der die Verstärkungswendel befestigt ist, schraubenlinienförmig aufgewickelt wird. Die Werkstoffbahn umfasst vorzugsweise ein oder mehrere der oben genannten thermoplastischen Kunststoffe. Ein bekanntes Verfahren sieht z.B. vor, dass eine als Profilfahne extrudierte Werkstoffbahn um einen Fertigungsdorn oder dergleichen aufgewickelt und der bereits auf den Fertigungsdorn aufgewickelte Teil der Bahn von diesem axial abgezogen werden, so dass die Bahn helixförmig aufgewickelt wird. Der Randbereich des neu auf den Fertigungsdorn auftreffenden Bahnabschnitts wird mit dem Randbereich des Bahnabschnitts verbunden, der den Dorn bereits einmal umschlungen hat. Auf diese Weise kann eine Schlauchleitung gebildet werden, die mit einem helixförmig verlaufenden Verstärkungselement versehen ist. Die Längskantenabschnitte benachbarter Wendelwicklungen bzw. die gegenüberliegenden Randbereiche der Werkstoffbahn können überlappend miteinander verbunden werden. Neben einer extrudierten Profilfahne kann auch ein Folienstreifen als Werkstoffbahn bereitgestellt werden, wobei der Folienstreifen derart gewendelt wird, dass benachbarte Randbereiche überlappen. In bevorzugter Weise werden die überlappenden Randbereiche durch Verschweißen miteinander verbunden.

Erfindungsgemäß weist die Wandung der erfindungsgemäßen Schlauchleitung ein integriertes Sensormaterial in Form einer Beschichtung des Verstärkungselements auf.

Das Sensormaterial weist mindestens eine Materialeigenschaft auf, die in Abhängigkeit mindestens eines zu ermittelnden Betriebsparameters der Schlauchleitung veränderlich ist. Unter "Betriebsparameter" im Sinne dieser Anmeldung ist eine Zustandsgröße der Schlauchleitung zu verstehen, die insbesondere ausgewählt ist aus der Gruppe bestehend aus der Temperatur der Schlauchwandung, z.B. der Temperatur im Inneren der Schlauchwandung oder der Temperatur an der inneren Oberfläche der Schlauchwandung, so dass auf die Temperatur des in der Schlauchleitung befindlichen Mediums geschlossen werden kann; dem auf die Schlauchwandung einwirkenden Über- oder Unterdruck; der Integrität der Schlauchwandung; dem Biegeradius der Schlauchleitung; der Dehnung oder Kompression der Schlauchleitung; der Vibration, der die Schlauchleitung ausgesetzt ist; und dem Alterungsgrad des Materials der Schlauchwandung. Das Sensormaterial ist derartig ausgestaltet, dass es zur Bestimmung mindestens eines Betriebsparameters geeignet ist.

Die erfindungsgemäße Schlauchleitung weist somit den großen Vorteil auf, dass aufgrund des in der Schlauchwandung enthaltenen Sensormaterials ein oder mehrere gewünschte Betriebsparameter der Schlauchleitung auf einfache Art und Weise direkt und ohne Verwendung von externen Messsonden bestimmbar sind.

Gemäß der vorliegenden Erfindung ist das Sensormaterial in Form von mindestens einem Additiv ausgebildet.

In einer bevorzugten Ausführungsform dieses Aspekts ist das Additiv ausgewählt aus der Gruppe bestehend aus thermochromen Additiven, piezochromen Additiven, piezoelektrischen Additiven, photochromen Additiven und Mischungen davon.

In einer Ausführungsform dieser Erfindung umfasst die Wandung der Schlauchleitung thermochromes Additiv. Der Begriff "thermochromes Additiv" bezeichnet Additive, insbesondere Pigmente, die bei Änderung der Temperatur den von ihnen erzeugten Farbeindruck verändern. Die Farbänderung kann entweder eine Veränderung der visuell wahrnehmbaren Farbe beinhalten, indem beispielsweise der Wellenlängenbereich, in dem Licht von dem Additiv absorbiert bzw. reflektiert wird, verändert wird, oder ein deutliches Abnehmen bzw. Zunehmen der Farbigkeit, d.h. der Farbintensität, beinhalten.

Im Rahmen dieser Erfindung kann der Farbwechsel bei den thermochromen Additiven fortlaufend über ein bestimmtes Temperaturintervall oder als deutlicher Farbumschlag bei einer spezifischen Umschlagstemperatur oder einem sehr kleinen Temperaturbereich erfolgen. In einer bevorzugten Ausführungsform werden solche thermochromen Additive ausgewählt, die eine Umschlagstemperatur in dem in der jeweiligen vorgesehenen Anwendung zu detektierenden Temperaturbereich aufweisen. Beispielsweise kann die Umschlagstemperatur je nach Einsatzgebiet der Schlauchleitung zwischen -30°C und +150°C liegen und z.B. etwa -20°C, -10°C, 0°C, 10°C, 20°C, 30°C, 40°C, 50°C, 60°C, 70°C oder 80°C betragen.

Das thermochrome Additiv kann durch eine irreversible Thermochromie, d.h. die durch Erwärmung hervorgerufene Farbänderung bleibt auch nach dem Abkühlen auf eine Temperatur unterhalb des Umschlagspunkts erhalten, oder eine reversible Thermochromie gekennzeichnet sein, d.h. das Additiv nimmt nach einer durch Erwärmung hervorgerufenen Farbänderung beim Abkühlen auf eine Temperatur unterhalb seiner Umschlagstemperatur wieder seine ursprüngliche Farbe an.

In einer weiteren Ausführungsform kann das thermochrome Additiv einen sog. "Erinnerungseffekt" (memory effect) aufweisen, d.h. dass die Farbänderungstemperatur bei einer Temperaturerhöhung eine andere als beim Abkühlen ist. Bei einer Auftragung der Farbintensität in Abhängigkeit der Temperatur kann in diesem Fall eine Hysterese beobachtet werden. Es kann so ein einmaliges Über- oder Unterschreiten der Temperatur auch nach einer erneuten Temperaturänderung detektiert werden.

Beispielsweise wird erfindungsgemäß vorgesehen, dass das thermochrome Additiv bei einer bestimmten Temperatureinwirkung dauerhaft oder reversibel die Farbe wechselt und somit eine eingetretene Überschreitung einer vorgesehenen Betriebstemperatur optisch erkennbar wird.

Das thermochrome Additiv ist vorzugsweise ein organisches oder anorganisches Additiv.

In einer bevorzugten Ausführungsform der vorliegenden Erfindung umfasst ein organisches thermochromes Additiv (a) eine elektronenabgebende chromatische organische Verbindung, (b) einen Elektronenakzeptor, (c) ein Reaktionsmedium, das die Temperatur bestimmt, bei der die Farbänderungsreaktion der Komponente (a) mit der Komponente (b) stattfindet, und ggf. (d) einen Farbveränderungstemperatur-Regulator. Beispiele von thermochromen reversiblen Pigmenten mit dieser Art von Zusammensetzungen werden beispielsweise in der US 5,919,404, US 6,494,950 und EP 1323540 beschrieben. Beispiele von thermochromen Pigmenten mit "Erinnerungseffekt" mit dieser Art von Zusammensetzung finden sich in US 2016/0130455 A1, US 6,494,950 und US 2013/0210622 A1.

Die elektronenabgebende chromatische organische Verbindung (a) kann aus einer Reihe von konventionellen, im Stand der Technik bekannten Verbindungen wie z.B. Verbindungen, die von Diphenylmethanphthalid, Phenylindolyl-phthalid, Indolylphthalid, Diphenylmethanazaphthalid, Phenylindolylazaphthalid, Fuoran, Styrylquinolin, Diazarhodaminlakton abgeleitet sind, sowie Pyridin-, Quinazolin-, und Bisquinazolinverbindungen ausgewählt sein.

Der Elektronenakzeptor (b) kann aus der Gruppe von Verbindungen mit mindestens einem aktiven Proton, Pseudosäure-Verbindungen (Verbindungen, die keine Säure sind jedoch als Säure in der Zusammensetzung wirken, um die Entwicklung einer Farbe des Bestandteil (a) zu bewirken) und Verbindungen mit einem Elektronenloch sowie Gallsäureester oder Alkoxyphenole der Formel I ausgewählt sein.

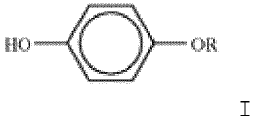

Das Reaktionsmedium (c) sollte bei reversiblen thermochromatischen Additiven so gewählt werden, dass es eine reversible Elektronendonor/Akzeptor-Reaktion ermöglicht. Bei Reaktionen mit "Erinnerungseffekt", die einen großen Hysterese-Effekt aufweisen sollen, können spezielle Reaktionsmedien eingesetzt werden. So können im Rahmen der hier offenbarten Erfindung unter anderem die in US 2016/0130455 A1 beschriebenen Ester der Formel (II) 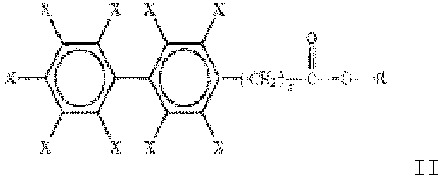 oder die in US 2013/0210622 A1 beschriebenen Ester der Formel III verwendet werden.

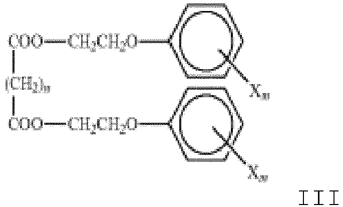

Komponente (d) kann aus einem oder mehreren hochschmelzenden Estern, Alkoholen, Ketonen, Säureamiden und Kohlenwasserstoffen ausgewählt sein. Vorzugsweise ist der Farbveränderungstemperatur-Regulator (d) ein aliphatischer Ester, ein aliphatisches Keton, ein aliphatischer Alkohol, ein aliphatisches Säureamid oder eine gesättigte Fettsäure.

Durch Mischen der Bestandteile (a), (b), (c) und ggf. (d) wird eine thermochrome Zusammensetzung erhalten, die sich als thermochromes Additiv zur Verwendung in der erfindungsgemäßen Schlauchleitung eignet. Die Anteile der Bestandteile können abhängig von den gewünschten Farbdichten, Farbveränderungstemperaturen und Farbveränderungsverhalten variiert werden.

Weiterhin können im Rahmen dieser Erfindung auch thermochrome Additive eingesetzt werden, die Leukofarbstoffe enthalten. Mögliche Leukofarbstoffe sind hierbei unter anderem Farbstoffe, die von Spirolakton, Fluoran, Spiropyran und Fulgid abgeleitet sind. Als Protonendonoren können unter anderen Säuren wie Bisphenol A, Parabene, 1,2,3-Triazolderivate, und 4-Hydroxycumarin eingesetzt werden.

Weiterhin können im Rahmen dieser Erfindung auch thermochrome Pigmente auf Basis von Flüssigkristallen, wie z.B. Biphenyle oder Cholesterinderivate, zum Einsatz kommen.

In einer weiteren bevorzugten Ausführungsform der vorliegenden Erfindung umfasst das thermochrome Additiv ein anorganisches thermochromes Pigment.

Beispiele für anorganische thermochrome Pigmente mit einem kontinuierlichen Farbwechsel, die im Rahmen dieser Erfindung eingesetzt werden können, sind unter anderem ZnO oder TiO₂.

Beispiele für anorganische thermochrome Pigmente mit einer spezifischen Übergangstemperatur sind unter anderem Kupfer(II)-Verbindungen, die das komplexe Anion [CuCl₄]²⁻ enthalten. Ein Beispiel dieser Klasse von Verbindungen ist Bis (diethylammonium) tetrachlorcuprat (II), [(C₂H₅)₂NH₂]₂[CuCl₄], sein, welches einen Farbwechsel von grün zu gelb bei 43°C aufweist.

Weitere Beispiele für anorganische thermochrome Pigmente umfassen HgI₂, AgI, Ag₂HgI₄, CdS, CdSe und Cu₂HgI₄.

In einer weiteren Ausführungsform der Erfindung umfasst die Wandung der Schlauchleitung photochromes Additiv. Der Begriff "photochromes Additiv" bezeichnet hierin Additive, insbesondere Pigmente, die bei Bestrahlung mit UV-Licht ihren erzeugten Farbeindruck verändern, indem beispielsweise der Wellenlängenbereich, in dem Licht von dem Additiv absorbiert bzw. reflektiert wird, reversibel oder irreversibel verändert wird. Beispielsweise wird erfindungsgemäß vorgesehen, dass das photochrome Additiv nach einer bestimmten Lichteinfallmenge dauerhaft die Farbe wechselt und somit eine eingetretene Überschreitung eines vorgesehenen Betriebs- bzw. Gebrauchszeitraums der Schlauchleitung optisch erkennbar wird. Es kann somit der Alterungsgrad der Schlauchwandung ermittelt werden. Darüber hinaus können photochrome Additive auch eingesetzt werden, um durch ihre Farbänderung die Schlauchleitung vor UV-Alterung zu schützen bzw. diese zu verzögern.

Das photochrome Additiv kann je nach gewünschtem Einsatzbereich der Schlauchleitung organische und/oder anorganische photochrome Pigmente umfassen.

Beispiele für geeignete photochrome Additive umfassen Verbindungen, die aus der Gruppe der Azobenzene, Salicylidenaniline und Fulgiden abgeleitet sind. Weitere Beispiele für geeignete photochrome Additive umfassen Verbindungen, die von Spiroverbindungen abgeleitet sind, wie z.B. Verbindungen aus der Gruppe der Spiropyrane, wie beispielsweise Spiroindolinbenzopyran, oder Spirooxazine, wie beispielsweise Spiroindolinnaphthoxazin und Spiroindolinpyridobenzoxazin. In einer weiteren Ausführungsform umfasst das photochrome Additiv Veresterungsprodukte von Acrylsäure oder Methacrylsäure und einem Polyol, z.B. einem Diol, Triol oder Tetracarbinol, wie sie in WO 89/05464 beschrieben werden. Alternativ können photochrome Pigmente verwendet werden, wie sie in der US 2005/0066453 A1 beschrieben werden.

In einer weiteren bevorzugten Ausführungsform der Erfindung umfasst die Wandung der Schlauchleitung ein piezochromes Additiv. Der Begriff "piezochromes Additiv" bezeichnet hierin Additive, insbesondere Pigmente, die aufgrund einer Änderung ihrer räumlichen Ausdehnung, beispielsweise in Folge des Einwirkens eines mechanischen Drucks, den von ihnen erzeugten Farbeindruck verändern, indem beispielsweise der Wellenlängenbereich, in dem Licht von dem Additiv absorbiert bzw. reflektiert wird, verändert wird. Die Farbänderung kann je nach Einsatzzweck der Schlauchleitung fortlaufend über ein großes Druckintervall oder bei einem spezifischen Umschlagsdruck oder in einem sehr kleinen Druckbereich erfolgen. In einer bevorzugten Ausführungsform wird das piezochrome Additiv so ausgewählt, dass sein Umschlagsdruck in dem zu detektierenden Druckbereich oder im Bereich der zu detektierenden mechanischen Belastung liegt. Beispielsweise weist das piezochrome Additiv einen Umschlagsdruck von < 0,3 bar, < 0,4 bar, < 0,5 bar, < 1 bar, < 2 bar, < 5 bar oder < 10 bar auf. Beispielsweise wird erfindungsgemäß vorgesehen, dass das piezochrome Additiv bei einer bestimmten Druckeinwirkung dauerhaft die Farbe wechselt und somit eine eingetretene Überschreitung eines vorgesehenen Biegeradius der Schlauchleitung, einer vorgesehenen Dehnung bzw. Kompression der Schlauchleitung oder eines vorgesehenen Betriebsdruckes der Schlauchleitung optisch erkennbar wird.

Im Rahmen dieser Erfindung kann das piezochrome Additiv ein anorganisches oder organisches piezochromes Pigment sein. Beispiele für geeignete piezochrome Additive umfassen anorganische Monokristalle, wie z.B. kristalline Salze wie LiF oder NaCl. Ein weiteres Beispiel stellt das anorganische Salz CuMoO₄ dar, das einen Farbübergang von Grün auf Rot bei einem Druck von 2,5 kBar aufweist.

In Ausführungsformen, bei denen ein Farbübergang bei niedrigeren Drücken gewünscht wird, werden in der Regel organische Polymer-Materialien als piezochrome Pigmente bevorzugt.

Ein Beispiel eines organischen piezochromen Additivs ist Poly(3-dodecylthiophen), das eine bathochrome Absorptionsverschiebung bei Änderung des Drucks von Normaldruck zu 8 kbar aufweist. Auch Poly[3-(1-dodecyl)thiophen-2,5-diyl] weist eine bathochrome Verschiebung der Absorption bei einem Druckanstieg von Normaldruck auf 10.71 GPa auf.

Beispiele für geeignete piezochrome Additive umfassen auch Poly(3-dodecylthiophen), Poly[3-(1-dodecyl)thiophen-2,5-diyl] sowie piezochrome Additive wie sie in der WO 2005/092995 beschrieben sind, bei denen ein piezochromes System aus einer ionochromen Substanz und einem Entwickler verwendet wird, wobei ein Elektronen-Donor-System ausgebildet wird. Als ionochrome Substanzen können pH-sensitive Farbstoffe oder Leukofarbstoffe wie z.B. Phthalidderivate, Derivate von Imidazol, Pyrrol, Bianthron, Xanthylidenanthron, Dixanthylen oder Helianthron verwendet werden.

Weitere Beispiele für geeignetes piezochromes Additiv sind in der DE 10 2009 035 363 A1 beschrieben. Alternativ kann als piezochromes Additiv eine Mischung aus Cholesteryloleylcarbonat, Cholesterylchlorid und Cholesterylnonanat verwendet werden, wobei in einer bevorzugten Ausführungsform diese drei Verbindungen in einem Gewichtsprozent-Verhältnis von 13,9 : 32,9 : 53,2 eingesetzt werden.

In einer weiteren bevorzugten Ausführungsform der Erfindung umfasst die Wandung der Schlauchleitung ein piezoelektrisches Additiv. Der Begriff "piezoelektrisches Additiv" bezeichnet hierin Additive, insbesondere Pigmente, bei denen eine elastische Verformung, z.B. durch einen Druck oder eine mechanische Belastung, zu einer Änderung der elektrischen Polarisation und somit zu einem Auftreten einer elektrischen Spannung an den Additivfestkörpern führt. Beispielsweise wird erfindungsgemäß vorgesehen, dass das piezoelektrische Additiv bei einer bestimmten Druck- oder Temperatureinwirkung dauerhaft oder reversibel sein elektrisches Verhalten wechselt und somit eine eingetretene Überschreitung einer vorgesehenen Betriebstemperatur, eines vorgesehenen Biegeradius der Schlauchleitung, einer vorgesehenen Dehnung bzw. Kompression der Schlauchleitung oder einer vorgesehenen Betriebsdruckes der Schlauchleitung anhand des geänderten elektrischen Verhaltens erkennbar wird. Auf diese Weise kann auch eine Vibration der Schlauchleitung erkennbar gemacht werden.

Im Rahmen dieser Erfindung kann das piezoelektrische Additiv ein anorganisches oder organisches Additiv sein.

In einer bevorzugten Ausführungsform ist das piezoelektrische Additiv ein piezoelektrischer Kristall wie zum Beispiel Quarz, Lithiumniobat, Berlinit, Minerale der Turmalingruppe oder Seignettesalz.

Weitere Beispiele für geeignete piezoelektrische Additive umfassen piezoelektrische synthetische Keramikmaterialien, wie (modifizierte) Blei-Zirkonat-Titanate (PZT), Bariumtitanate (BTO) oder Blei-Magnesium-Niobate (PMN), oder andere piezoelektrische Materialien, wie Polyvinylidenfluorid (PVdF).

In einer weiteren bevorzugten Ausführungsform kann das piezoelektrische Additiv ein piezoelektrisches Komposit-Material sein, bei dem Partikel eines stark piezoelektrischen Materials in einer Matrix eines strukturierten Materials zusammengehalten werden. Alternativ können auch piezoelektrische Dünnschichten aus z.B. Zinkoxid (ZnO) oder Aluminiumnitrid (AlN) eingesetzt werden.

Die oben beschriebenen thermochromen, photochromen, piezochromen oder piezoelektrischen Additive werden vorzugsweise in Form eines Masterbatches vor oder während eines Extrusionsvorganges zu einer Kunststoffzusammensetzung gegeben. So kann das Additiv auf einfache Weise gleichmäßig in einen Kunststoff eingebracht werden, der später die Wandung der Schlauchleitung oder einen gewünschten Teil der Schlauchwandung, wie z.B. eine Beschichtung auf der Innenseite oder Außenseite der Schlauchleitung, eine Beschichtung eines Verstärkungselements oder eine Beschichtung eines Gewebes, oder einen gewünschten Teil einer Schlauchkupplung, wie z.B. eines Anschlussstückes, bildet.

In einer bevorzugten Ausführungsform liegen die thermochromen, photochromen, piezochromen oder piezoelektrischen Additive in einer mikroverkapselten Form vor. Für die Mikroverkapselung können konventionelle, im Stand der Technik bekannte Techniken verwendet werden. Beispiele hierfür umfassen eine Grenzflächen-Polymerisation, *in situ* Polymerisation, eine Aushärtungsbeschichtung in Flüssigkeit, eine Phasentrennung aus einer wässrigen Lösung, eine Phasentrennung aus einem organischen Lösungsmittel, eine Schmelz-Dispersions-Abkühlung, eine Luftsuspensionsbeschichtung und Sprühtrocknen. Bevor die Mikrokapseln einer Verwendung im Sinne dieser Erfindung zugeführt wird, kann ihre Oberfläche mit einem zusätzlichen Harzfilm beschichtet werden, um dadurch die Haltbarkeit zu erhöhen oder die Oberflächeneigenschaften zu modifizieren und somit die Kompatibilität mit dem Kunststoff der Schlauchwandung und das Einbringen des Additivs zu verbessern.

Das Additiv kann in einer Ausführungsform ferner zusätzlich einen Lichtstabilisator enthalten, um einen Photoabbau der Additiv-Zusammensetzung zu verhindern und damit die Langlebigkeit der erfindungsgemäßen Schlauchleitung zu erhöhen. Beispiele für den Lichtstabilisator beinhalten Verbindungen, die Oxidationsreaktionen inhibieren, wie z.B. Ultraviolett-Absorptionsmittel und Antioxidantien. Der Lichtstabilisator kann auch zusammen mit dem Additiv mikroverkapselt werden.

Das Additiv kann in einer weiteren Ausführungsform zusätzlich umhüllt sein, d.h. mit einer oder mehreren anorganischen oder organischen Hüllen umgeben sein. Die Hülle kann beispielsweise Siliziumoxid, Aluminiumoxid, Zinnoxid, Titanoxid, Aluminiumphosphat, Aluminium-Zink-Phosphat, einem Organopolysiloxan, Siliziumnitrid, Siliziumcarbid und/oder Aluminiumnitrid enthalten.

Gemäß einer besonders bevorzugten Ausführungsform der erfindungsgemäßen Schlauchleitung weist die Wandung mindestens eine Schicht auf, die einen thermoplastischen Kunststoff umfasst, wobei ein oder mehrere der oben beschriebenen Additive in dem thermoplastischen Kunststoff enthalten sind.

Bei der Schicht kann es sich beispielsweise um eine Beschichtung der inneren Oberfläche der Schlauchwandung handeln, wie z.B. eine Auskleidung eines aus extrudierten Profilfahnen aufgebauten Spiralschlauches, wie er z.B. in der DE 10 2006 019 562 beschrieben ist. Die Anordnung eines Additivs in einer Beschichtung der zum Schlauchinneren zeigenden Oberfläche der Schlauchleitung weist den Vorteil auf, dass die Betriebsparameter der Schlauchwandung, z.B. die Temperatur, direkt an der Kontaktzone zwischen der Schlauchwandung und dem in der Schlauchleitung enthaltenen Medium bestimmt werden kann.

Für den Fall, dass das Additiv ein farbveränderndes Additiv, d.h. ein thermochromes, photochromes oder piezochromes Additiv, umfasst, ist die Schlauchwandung an sich vorzugsweise transparent ausgestaltet, so dass die Farbveränderung auch von außen wahrnehmbar ist.

In einer anderen Ausführungsform ist ein Additiv in einer Beschichtung der äußeren Oberfläche der Schlauchwandung enthalten. Beispiele für eine derartige Beschichtung umfassen eine Schutzbeschichtung oder sog. Scheuerschutz, d.h. eine von außen aufgebrachte Beschichtung oder ein von außen aufgesetztes Kunststoffprofil, das die Schlauchleitung vor Abrieb oder Verkratzen der äußeren Oberfläche schützt. Diese Ausführungsform weist den Vorteil auf, dass die Farbänderungen von thermochromen, photochromen und piezochromen Additiven besonders gut wahrnehmbar sind.

Eine Schicht der Schlauchwandung im Sinne dieser Anmeldung schließt auch die Wandung an sich ein. So kann in einer weiteren Ausführungsform ein Additiv in der Wandung eines oben beschriebenen thermoplastischen Spiral- oder Glattschlauches enthalten sein. Beispielsweise ist ein Additiv vorzugsweise gleichmäßig in der extrudierten Profilfahne eines oben beschriebenen thermoplastischen Schlauches enthalten. Für den Fall, dass die Schlauchwandung mehrere Schichten aufweist, wie z.B. ein Schlauch, der nach der oben beschriebenen "Sandwich-Bauweise" aufgebaut ist, können eine oder mehrere der Schichten das Additiv enthalten.

Die vorliegende Erfindung ist dadurch gekennzeichnet, dass die Wandung der Schlauchleitung ein helixförmig verlaufendes Verstärkungselement, insbesondere eine helixförmig verlaufende Verstärkungswendel, aufweist, wobei das Verstärkungselement eine Beschichtung, insbesondere eine Beschichtung aus thermoplastischen Kunststoff, aufweist und das Additiv in der Beschichtung des Verstärkungselements enthalten ist. In dieser Ausführungsform wird das Verstärkungselement, wie eine Verstärkungswendel, die typischerweise aus Metalldraht oder Kunststoff besteht, in einem separaten Schritt oder einem in einem in die Produktion der endgültigen Schlauchleitung integrierten Schritt, z.B. mittels eines Online- oder Coextrusionsverfahrens, mit einem Additiv beschichtet. Der Vorteil dieser Ausführungsform liegt insbesondere darin, dass mögliche negative Einflüsse des Additivs auf die Extrudier- oder Verschweißbarkeit des thermoplastischen Kunststoffmaterials der eigentlichen Schlauchwandung vermieden werden. Dies gilt sowohl für eingebettete, d.h. innenliegende, Verstärkungselemente als auch für außenliegende, wie z.B. aufgeschweißte Verstärkungselemente.

Gemäß einer weiteren bevorzugten Ausführungsform der Erfindung weist die Schlauchwandung ein beschichtetes Gewebe auf, wobei ein Additiv in der Beschichtung des Gewebes enthalten ist. Beispielsweise ist es sinnvoll einen Gewebeschlauch, der für Hochtemperaturanwendungen vorgesehen ist, mit einer Beschichtung auszugestalten, die ein thermochromes Additiv umfasst, um so festzustellen, wenn das Hochtemperaturmedium den vorgegebenen Temperaturbereich überschreitet.

Es ist erfindungsgemäß nicht notwendig, dass die gesamte Schlauchwand ein Sensormaterial, d.h. Additiv, aufweist.

Während bei flexiblen Schlauchleitungen, die ein farbveränderliches Additiv, z.B. ein thermochromes, photochromes oder piezochromes Additiv, als Sensormaterial enthalten, der Betriebsparameter bereits rein optisch ermittelt werden kann, weisen Schlauchleitungen mit elektrisch reaktivem Funktionsadditiv als Sensormaterial vorzugsweise einen Anschluss und eine Peripherie zur Auswertung der z.B. elektrischen oder optischen Signale auf.

In einer besonders bevorzugten Ausführungsform umfasst die erfindungsgemäße flexible Schlauchleitung somit ferner eine Einrichtung zur Erfassung von für die Materialeigenschaften des Sensormaterials repräsentativen Messdaten sowie ggf. eine Einrichtung zur Übertragung der Messdaten an eine Datenverarbeitungseinrichtung.

Die Einrichtung zur Erfassung von für die Materialeigenschaften des Sensormaterials repräsentativen Messdaten ist somit vorzugsweise geeignet das elektrische oder optische Verhalten des Sensormaterials zu erfassen. Beispielsweise stellt die Einrichtung zur Erfassung von für die Materialeigenschaften des Sensormaterials repräsentativen Messdaten einen elektrischen Widerstandsmesser oder Durchgangsmesser dar, der mit dem Sensormaterial, wie z.B. einer piezoelektrischen Additiv enthaltenden Schicht der Schlauchwandung, elektrisch leitend verbunden ist.

Die von der Einrichtung erfassten Messdaten können direkt an der Einrichtung und somit direkt an der Schlauchleitung z.B. mittels eines Displays angezeigt werden. Es ist auch möglich, die Messdaten mit Hilfe eines Kabels oder kabellos an eine Speichereinrichtung oder eine Datenverarbeitungseinrichtung zu übertragen.

In einer bevorzugten Ausführungsform weist die erfindungsgemäße Schlauchleitung somit ferner eine Speichereinrichtung und/oder eine Einrichtung zur Übertragung der Messdaten an eine Datenverarbeitungseinrichtung auf.

In einer Ausführungsform ist in der Speichereinrichtung eine die Schlauchleitung eindeutig kennzeichnende Identitätskennung gespeichert, wobei die Einrichtung zur Erfassung von für die Materialeigenschaften des Sensormaterials repräsentativen Messdaten und die Speichereinrichtung mit der Datenübertragungseinrichtung zur Datenfernübertragung verbunden sind, sodass die Identitätskennung über die Datenübertragungseinrichtung abfragbar ist. Insbesondere ist es bevorzugt, dass die Einrichtung zur Erfassung von für die Materialeigenschaften des Sensormaterials repräsentativen Messdaten dazu eingerichtet ist, für die Betriebshistorie der Schlauchleitung repräsentative Daten einschließlich Betriebszeiten und Messdaten für Betriebsparameter oder daraus abgeleitete Betriebsgrößen in der Speichereinrichtung zu speichern.

Des Weiteren ist die Einrichtung zur Erfassung von für die Materialeigenschaften des Sensormaterials repräsentativen Messdaten vorzugsweise dazu eingerichtet, Messdaten zusammen mit der aus der Speichereinrichtung abgerufenen Identitätskennung automatisch periodisch über die Datenübertragungseinrichtung zu senden oder auf ein externes Abfragesignal an die Datenübertragungseinrichtung hin über diese zu senden.

In einer bevorzugten Ausführungsform ist die Speichereinrichtung ein sog. RFID-Chip, der in der Schlauchwandung oder in einem Anschlussstück integriert ist.

Ein großer Vorteil der oben beschriebenen erfindungsgemäßen Schlauchleitung besteht darin, dass der Anwender das offenbarte System zur Überwachung der Betriebsparameter der Schlauchleitung ohne Weiteres mit einem vorhandenen System zur Steuerung der Fördereigenschaften der Schlauchleitung kombinieren kann, so dass der Aufwand zur Implementierung des Systems und der Erwerb zusätzlicher elektronischer Komponenten minimal ist.

In einer Ausführungsform weist die erfindungsgemäße Schlauchleitung eine Kombination von zwei oder mehr Additiven auf, z.B. eine Kombination eines thermochromen Additivs und eines piezoelektrischen Additivs.

Wie oben gezeigt, eignet sich das oben beschriebene Sensormaterial hervorragend zur Ermittlung von Betriebsparametern von Schlauchleitungen. Demgemäß betrifft die vorliegende Erfindung auch die Verwendung von in der Wandung einer Schlauchleitung integriertem Sensormaterial, das eine sich mit einem zu ermittelnden Betriebsparameter der Schlauchleitung veränderliche Materialeigenschaft hat, zur Überwachung von Betriebsparametern von flexiblen Schlauchleitungen. Mithin betrifft die Erfindung auch die Verwendung der erfindungsgemäßen flexiblen Schlauchleitung zur Bestimmung und Überwachung von Betriebsparametern der Schlauchleitung.

Des Weiteren betrifft die Erfindung auch ein Verfahren zur Herstellung einer erfindungsgemäßen Schlauchleitung, bei dem das Sensormaterial vor, während oder nach der Erzeugung der flexiblen Schlauchleitung in oder an die Schlauchwandung gebracht wird. Bevorzugte Aspekte des erfindungsgemäßen Herstellungsverfahrens sind oben im Zusammenhang mit der Beschreibung von bevorzugtem Sensormaterial offenbart.

Im Folgenden wird die vorliegende Erfindung anhand eines lediglich bevorzugten Ausführungsbeispiels und einer Zeichnung näher erläutert. Es zeigt:

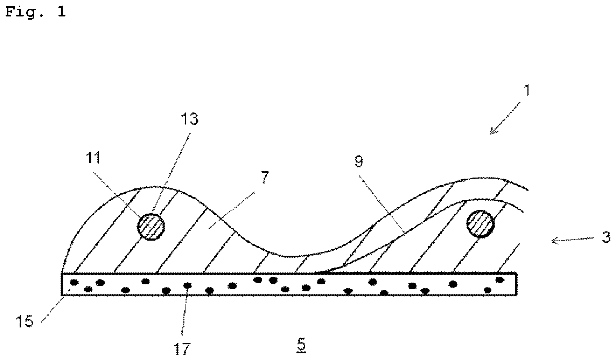

- Figur 1:: eine Schlauchleitung gemäß einer ersten Ausführungsform der Erfindung in einer Schnittansicht;

Die Figur 1 zeigt einen Abschnitt einer Schlauchleitung 1 bzw. eines Schlauches mit einer Schlauchwandung 3, die das Schlauchinnere 5 umgibt. Die Schlauchwandung 3 weist eine helixförmig verlaufende Werkstoffbahn 7 auf, bei der es sich um eine schraubenlinienförmig aufgewendelte extrudierte Profilfahne aus transparentem thermoplastischem Kunststoff handelt, wobei benachbarte Abschnitte der Werkstoffbahn im Randbereich 9 überlappend miteinander verbunden sind. In die Werkstoffbahn 7 ist ein Verstärkungselement 11 in Form einer Drahtspirale eingebetet, die sich ebenfalls helixförmig in Schlauchrichtung bzw. in Längsrichtung der Schlauchleitung 1 erstreckt.

Das Verstärkungselement 11 weist eine Beschichtung 13 auf, in der thermochromes Additiv enthalten ist, das bis zu einer Temperatur von 80°C transparent ist und bei einer Temperatur von höher als 80°C spontan seine Farbe ändert. Auf diese Art und Weise kann ein Betreiber schnell, kostengünstig und zuverlässig erkennen, wenn die Temperatur der Wandung 3 der Schlauchleitung 1 einen kritischen Wert von 80°C überschritten hat. Die Beschichtung 13 wird erhalten, indem die Drahtspirale des Verstärkungselements 11 zunächst mit dem thermochromen Additiv beschichtet wird und anschließend mit einer dünnen Schicht eines transparenten Kunststoffes überzogen wird. Im Anschluss daran wird die beschichtete Drahtspirale einem standardmäßigen Fertigungsverfahren zur Herstellung von Spiralschläuchen zugeführt. Die Tatsache, dass das Additiv lediglich in der Beschichtung des Verstärkungselements 11 enthalten ist und die Werkstoffbahn 7 frei von thermochromen Additiv ist, führt zu dem weiteren Vorteil, dass die Qualität und Sicherheit der Verbindung benachbarter Werkstoffbahnen 7 in den Randbereichen 9 mittels Verschweißen und/oder Verkleben nicht negativ beeinträchtigt wird.

Die Schlauchwandung 3 weist ferner auf der zum Schlauchinneren 5 hinweisenden Oberfläche eine Beschichtung 15 auf, in der eine Vielzahl von Additivpartikeln 17 eingebettet sind. Die Additivpartikel 17 stellen in dieser Ausführungsform ebenfalls ein thermochromes Additiv dar, so dass mit dessen Hilfe die Temperatur der Schlauchwandung 3 im Bereich der Kontaktzone mit dem im Schlauchinneren 5 befindlichen Medium überwacht werden kann. Die Art der Farbänderung der Additivpartikel 17 unterscheidet sich vorzugsweise von der Farbänderung des in Beschichtung 13 enthaltenden Additivs. In jedem Fall kann eine Temperaturüberschreitung an der inneren Oberfläche der Schlauchwandung 3 auch bereits schon deshalb von einer Temperaturüberschreitung im Bereich des Verstärkungselements 11 unterschieden werden, da die durch Additivpartikel 17 hervorgerufene Farbänderung im Wesentlichen über einen großen Bereich der Beschichtung 15 und nicht nur im Bereich des Verstärkungselements 11 zu beobachten ist.

## Patentansprüche

1. Flexible Schlauchleitung (1) mit einer Wandung (3), wobei die Wandung (3) integriertes Sensormaterial in Form von mindestens einem Additiv (17) aufweist, das eine sich mit einem zu ermittelnden Betriebsparameter der Schlauchleitung (1) veränderliche Materialeigenschaft hat, wobei die Wandung (3) ein helixförmig verlaufendes Verstärkungselement (11)
**dadurch gekennzeichnet, dass** das Verstärkungselement (11) eine Beschichtung (13) aufweist und das Additiv in der Beschichtung (13) des Verstärkungselements (11) enthalten ist.

2. Flexible Schlauchleitung (1) nach Anspruch 1, wobei das Additiv (17) ausgewählt ist aus der Gruppe bestehend aus thermochromen Additiven, piezochromen Additiven, piezoelektrischen Additiven, photochromen Additiven und Mischungen davon.

3. Flexible Schlauchleitung (1) nach Anspruch 2, wobei das Additiv (17) in mikroverkapselter Form vorliegt.

4. Flexible Schlauchleitung (1) nach Anspruch 1, wobei die Wandung (3) einen thermoplastischen Kunststoff umfasst.

5. Flexible Schlauchleitung (1) nach Anspruch 1, wobei die Wandung (3) ein Gewebe umfasst.

6. Flexible Schlauchleitung (1) nach Anspruch 4 oder 5, wobei Verstärkungselement (11) vollständig oder teilweise in der Schlauchwandung (3) eingebettet ist.

7. Flexible Schlauchleitung (1) nach einem der vorhergehenden Ansprüche, wobei die Beschichtung (13) eine Beschichtung aus thermoplastischem Kunststoff ist.

8. Flexible Schlauchleitung (1) nach einem der vorhergehenden Ansprüche, wobei der Betriebsparameter der Schlauchleitung (1) ausgewählt ist aus der Gruppe bestehend aus der Temperatur der Schlauchwandung, dem auf die Schlauchwandung einwirkenden Über- oder Unterdruck, der Integrität der Schlauchwandung, dem Biegeradius der Schlauchleitung, der Dehnung oder Kompression der Schlauchleitung, der Vibration und dem Alterungsgrad des Materials der Schlauchwandung.

9. Flexible Schlauchleitung (1) nach einem der vorhergehenden Ansprüche ferner umfassend eine Einrichtung (33) zur Erfassung von für die Materialeigenschaften des Sensormaterials repräsentativen Messdaten und ggf. eine Einrichtung (35) zur Übertragung der Messdaten an eine Datenverarbeitungseinrichtung.

10. Verwendung von in der Wandung (3) einer Schlauchleitung (1) integriertem Sensormaterial in Form von mindestens einem Additiv (17), das eine sich mit einem zu ermittelnden Betriebsparameter der Schlauchleitung (1) veränderliche Materialeigenschaft hat, zur Überwachung von Betriebsparametern von flexiblen Schlauchleitungen (1), wobei die Wandung (3) ein helixförmig verlaufendes Verstärkungselement (11) mit einer Beschichtung (13) aufweist und das Additiv (17) in der Beschichtung (13) des Verstärkungselements (11) enthalten ist.

## Claims

1. Flexible hose line (1) with a wall (3), wherein the wall (3) has integrated sensor material in the form of at least one additive (17) which has a material property that varies with an operating parameter of the hose line (1) to be ascertained, wherein the wall (3) has a helically running reinforcing element (11), **characterized in that** the reinforcing element (11) has a coating (13) and **in that** the additive is contained in the coating (13) of the reinforcing element (11) .

2. Flexible hose line (1) according to claim 1, wherein the additive (17) is selected from the group consisting of thermochromic additives, piezochromic additives, piezoelectric additives, photochromic additives and mixtures thereof.

3. Flexible hose line (1) according to claim 2, wherein the additive (17) is present in a microencapsulated form.

4. Flexible hose line (1) according to claim 1, wherein the wall (3) comprises a thermoplastic material.

5. Flexible hose line (1) according to claim 1, wherein the wall (3) comprises a fabric.

6. Flexible hose line (1) according to claim 4 or 5, wherein the reinforcing element (11) is completely or partially embedded in the hose wall (3).

7. Flexible hose line (1) according to any one of the preceding claims, wherein the coating (13) is a coating made of a thermoplastic material.

8. Flexible hose line (1) according to any one of the preceding claims, wherein the operating parameter of the hose line (1) is selected from the group consisting of the temperature of the hose wall, the positive or negative pressure acting on the hose wall, the integrity of the hose wall, the bend radius of the hose line, the elongation or compression of the hose line, the vibration and the degree of ageing of the material of the hose wall.

9. Flexible hose line (1) according to any one of the preceding claims, further comprising a device (33) for recording measurement data representative of the material properties of the sensor material and, optionally, a device (35) for transmitting the measurement data to a data processing device.

10. Use of a sensor material integrated in the wall (3) of a hose line (1) in the form of at least one additive (17) which has a material property that varies with an operating parameter of the hose line (1) to be determined, for monitoring operating parameters of flexible hose lines (1), wherein the wall (3) has a helically running reinforcing element (11) with a coating (13) and the additive (17) is contained in the coating (13) of the reinforcing element (11).

## Revendications

1. Conduite flexible (1) avec une paroi (3), la paroi (3) présentant un matériau de détection intégré sous la forme d'au moins un additif (17), qui présente une propriété de matériau qui change avec un paramètre de fonctionnement de la conduite flexible (1) à déterminer, dans laquelle la paroi (3) présente un élément de renforcement hélicoïdal (11)
**caractérisée en ce que** l'élément de renforcement (11) comporte un revêtement (13) et l'additif est contenu dans le revêtement (13) de l'élément de renforcement (11).

2. Conduite flexible (1) selon la revendication 1, dans laquelle l'additif (17) est sélectionné dans le groupe constitué par des additifs thermochromiques, des additifs piézochromiques, des additifs piézoélectriques, des additifs photochromiques et des mélanges de ceux-ci.

3. Conduite flexible (1) selon la revendication 2, dans laquelle l'additif (17) est sous forme microencapsulée.

4. Conduite flexible (1) selon la revendication 1, dans laquelle la paroi (3) comprend un matériau thermoplastique.

5. Conduite flexible (1) selon la revendication 1, dans laquelle la paroi (3) comprend un tissu.

6. Conduite flexible (1) selon la revendication 4 ou 5, dans laquelle l'élément de renforcement (11) est complètement ou partiellement incorporé dans la paroi de conduite (3).

7. Conduite flexible (1) selon l'une quelconque des revendications précédentes, dans laquelle le revêtement (13) est un revêtement en matière thermoplastique.

8. Conduite flexible (1) selon l'une quelconque des revendications précédentes, dans laquelle le paramètre de fonctionnement de la conduite flexible (1) est sélectionné dans le groupe constitué par la température de la paroi de conduite, la pression positive ou négative agissant sur la paroi de conduite, l'intégrité de la paroi de conduite, le rayon de courbure de la conduite, l'étirement ou la compression de la conduite, les vibrations et le degré de vieillissement du matériau de la paroi de conduite.

9. Conduite flexible (1) selon l'une quelconque des revendications précédentes, comprenant en outre un dispositif (33) pour détecter des données de mesure représentatives des propriétés matérielles du matériau de détection et facultativement un dispositif (35) pour transmettre les données de mesure à un dispositif de traitement de données.

10. Utilisation d'un matériau de détection intégré dans la paroi (3) d'une conduite flexible (1) sous la forme d'au moins un additif (17), qui présente une propriété de matériau qui change avec un paramètre de fonctionnement de la conduite flexible (1) à déterminer, pour surveiller des paramètres de fonctionnement de la conduite flexible (1), dans laquelle la paroi (3) présente un élément de renforcement hélicoïdal (11) avec un revêtement (13) et l'additif (17) est contenu dans le revêtement (13) de l'élément de renforcement (11).
